# EUROPÄISCHE PATENTSCHRIFT

(11) **EP 2 771 655 B1**
(45) Veröffentlichungstag und Bekanntmachung des Hinweises auf die Patenterteilung: **23.06.2021**
(21) Anmeldenummer: 12783171.7
(22) Anmeldetag: 23.10.2012
(51) Int. Cl.: G01F 1/80, G01F 15/10, G01F 1/84

(54) **MEßWANDLER SOWIE DAMIT GEBILDETES MEßSYSTEM**
MEASURING TRANSDUCER AND MEASURING SYSTEM COMPRISING SAME
TRANSDUCTEUR DE MESURE ET SYSTÈME DE MESURE RÉALISÉ AVEC CELUI-CI

(30) Priorität: 28.10.2011 DE 102011085408
(43) Veröffentlichungstag der Anmeldung: 03.09.2014
(73) Patentinhaber: Endress+Hauser Flowtec AG, 4153 Reinach (BL) (CH)
(72) Erfinder: SCHUKER, Michael, 79595 Rümmingen (DE)
(74) Vertreter: Andres, Angelika Maria
(86) Internationale Anmeldenummer: PCT/EP2012/070924
(87) Internationale Veröffentlichungsnummer: WO 2013/060659

(56) Entgegenhaltungen:
- US-A- 5 731 527
- US-A1- 2008 022 781
- US-A1- 2009 173 167

## Beschreibung

Die Erfindung betrifft einen Meßwandler mit einem Meßrohr zum Führen eines strömenden Mediums und einem mit dem wenigsten einen Meßrohr mechanisch gekoppelten Aufnehmer-Gehäuse mit verbesserter Druckfestigkeit. Darüberhinaus betrifft die Erfindung ein mittels eines solchen Meßwandlers gebildetes Meßsystem.

Zur Erfassung von Meßgrößen strömender Medien, beispielsweise Gasen und/oder Flüssigkeiten, und zur Erzeugung von nämliche Meßgröße entsprechend repräsentierenden Meßwerte werden in der industriellen Prozeß-Meßtechnik, insb. auch im Zusammenhang mit der Automatisierung chemischer oder verfahrenstechnischer Prozesse, prozeßnah installierte Meßsysteme verwendet, die mittels eines mit einer das jeweilige Fluid führenden, beispielsweise als Rohrleitung ausgebildeten, Prozeßleitung kommunizierenden, mithin im Betrieb vom Fluid durchströmten Meßwandler, beispielsweise einem magnetisch-induktive Meßwandler oder Meßwandler vom Vibrationstyp, sowie einer mit dem Meßwandler elektrisch gekoppelten, ggf. auch davon abgesetzten Meßelektronik gebildet sind. Die zu erfassende Meßgröße kann beispielsweise eine Dichte, eine Strömungsgeschwindigkeit, ein Volumendurchfluß ein Massendurchfluß, oder eine Viskosität des Mediums sein. Beispiele für solche, etwa als magnetisch-induktive Meßwandler oder Meßwandler vom Vibrationstyp, ausgebildeten Meßwandler für strömende Medien bzw. damit gebildete Meßsysteme sind u.a. in der EP-A 045 646, der EP-A 1 001 254, der EP-A 770 856, der US-A 53 01 557, der US-A 57 96 011, der US-A 60 44 715, der US-B 67 11 958, der US-B 67 76 052, der US-B 69 57 587, der US-B 70 17 424, der US-B 73 92 709, der WO-A 00/ 57 141, der WO-A 00/57141, der WO-A 01/65213, der WO-A 03/021202, der WO-A 03/021203, der WO-A 03/076879 oder der WO-A 98/38479 beschrieben US 2008/0022781, US5731527 und US 2009/0173167 beschreiben Messwandlern wobei das Messrohr eine externe Hülle aufweist.

Marktgängige Meßwandler für strömende Medien, nicht zuletzt magnetisch-induktive Meßwandler oder Meßwandler vom Vibrationstyp, sind zumeist als vorkonfektionierte und vorab kalibrierte Baueinheit mit einem in den Verlauf der jeweiligen Prozeßleitung einsetzbaren, als Teil eines physikalisch-elektrischen Wandlers dienenden, im Betrieb des Meßsystem vom zu messenden Medium durchströmten Meßrohr mit wenigstens einem daran angebrachten Sensorelement sowie einem mit dem wenigsten einen, beispielsweise aus einem Metall hergestellten, Meßrohr mechanisch gekoppelten, als äußere Schutz für den physikalisch-elektrischen Wandlers dienenden, zumeist aus Metall hergestellten Aufnehmer-Gehäuse, das eine das wenigstens eine Meßrohr aufnehmende Kavität bildet, realisiert. Im Falle eines Meßwandlers vom Vibrationstyp wird das wenigstens eine Meßrohr an, zumeist mittels eines dickwandigen, insb. rohrförmigen und/oder balkenartigen, Tragzylinders oder einer Rahmenkonstruktion gebildeten, ein- bzw. auslaßseitigen Enden des Aufnehmer-Gehäuses schwingfähig gehaltert und zum Erzeugen von mechanischen Reaktionskräfte im im Meßrohr geführten Medium mittels wenigstens eines in Wirkverbindung mit nämlichem Meßrohr stehenden, zumeist elektro-dynamischen, Schwingungserregers zumindest zeitweise zu Vibrationen um eine statisch Ruhelage angeregt. Zum Erfassen, insb. einlaßseitiger bzw. auslaßseitiger, Vibrationen des Meßrohrs und zum Erzeugen wenigstens eines diese repräsentierenden Meßsignals weisen solche Meßwandler vom Vibrationstyp ferner jeweils wenigsten einen auf Vibrationen, insb. Biegeschwingungen, des Meßrohrs reagierenden, ebenfalls zumeist elektrodynamischen Schwingungssensor auf.

Zur Weiterverarbeitung oder Auswertung von mittels des Meßwandlers erzeugten Meßsignalen weist dieses ferner wenigstens eine entsprechende Meßelektronik auf. Die mit dem jeweiligen Sensorelement, mithin mit dem Meßwandler in geeigneter Weise kommunizierende Meßelektronik erzeugt im Betrieb unter Verwendung des wenigstens einen Meßsignals wiederholt wenigstens einen die Meßgröße momentan repräsentierenden Meßwert, beispielsweise also einen Massendurchfluß-Meßwert, Volumendurchfluß-Meßwert, einen Dichte-Meßwert, und/oder einen Viskositäts-Meßwert. Zur Aufnahme der Meßelektronik umfassen solche Meßsysteme zumeist ein entsprechendes Elektronik-Gehäuse, das beispielsweise vom Meßwandler entfernt angeordnet und mit diesem lediglich über eine flexible Leitung verbunden sein kann. Alternativ dazu kann das Elektronik-Gehäuse, wie beispielsweise auch in der eingangs erwähnten US-A 57 96 011 gezeigt, unter Bildung eines kompakten In-Line-Meßgeräts direkt am Meßwandler-Gehäuse fixiert sein. Bei Meßsystemen der beschriebenen Art ist die jeweilige Meßelektronik üblicherweise zudem über entsprechende elektrische Leitungen und/oder drahtlos per Funk mit einem von der Meßelektronik zumeist räumlich entfernt angeordneten und zumeist auch räumlich verteilten übergeordneten elektronischen Datenverarbeitungssystem elektrisch verbunden, an das die vom jeweiligen Meßsystem erzeugten Meßwerte mittels eines diese entsprechend tragenden Meßwertesignals zeitnah weitergegeben werden. Meßsystem der beschriebenen Art sind zudem üblicherweise mittels eines innerhalb des übergeordneten Datenverarbeitungssystems vorgesehenen - leitungsgebundenen und/oder funkbasierten - Datenübertragungsnetzwerks miteinander und/oder mit entsprechenden elektronischen Prozeß-Steuerungen verbunden, beispielsweise vor Ort installierte Speicherprogrammierbare Steuerungen (SPS) oder in einer entfernten Leitwarte installierte Prozeß-Leitrechnern, wohin die mittels des Meßsystems erzeugten und in geeigneter Weise digitalisierten und entsprechend codierten Meßwerte weitergesendet werden. Mittels Prozeß-Leitrechner können, unter Verwendung entsprechend installierter Softwarekomponenten, die übertragenen Meßwerte weiterverarbeitet und als entsprechende Meßergebnisse z.B. auf Monitoren visualisiert und/oder in Steuersignale für andere als Stellgeräte ausgebildete Feldgeräte, wie z.B. Magnet-Ventile, Elektro-Motoren etc., umgewandelt werden. Dementsprechend dient das Datenverarbeitungssystem üblicherweise auch dazu, das von der Meßelektronik gelieferte Meßwertesignal entsprechend den Anforderungen nachgelagerter Datenübertragungsnetzwerke zu konditionieren, beispielsweise geeignet zu digitalisieren und gegebenenfalls in ein entsprechendes Telegramm umzusetzen, und/oder vor Ort auszuwerten. Dafür sind in solchen Datenverarbeitungssystemen mit den jeweiligen Verbindungsleitungen elektrisch gekoppelte Auswerteschaltungen vorgesehen, die die von der jeweiligen Meßelektronik empfangenen Meßwerte vor- und/oder weiterverarbeiten sowie, falls erforderliche, geeignet konvertieren. Zur Datenübertragung dienen in solchen industriellen Datenverarbeitungssystemen zumindest abschnittsweise, insb. serielle, Feldbusse, wie z.B. FOUNDATION FIELDBUS, CAN, CAN-OPEN RACKBUS-RS 485, PROFIBUS etc., oder beispielsweise auch Netzwerke auf Basis des ETHERNET-Standards sowie die entsprechenden, zumeist anwendungsübergreifend standardisierten Übertragungs-Protokolle.

Das Aufnehmer-Gehäuse dient neben der Halterung des wenigstens einen, innerhalb der durch das Aufnehmer-Gehäuse gebildeten Kavität plazierte Meßrohrs im besonderen auch dazu, dieses Erreger- und die Sensoranordnung sowie andere innen liegenden Bauteile vor äußeren Umwelteinflüssen, wie z.B. Staub oder Spritzwasser, zu schützen, mithin eine möglichst hermetisch dichte Kavität bereitzustellen. Seitens der Anwender wird an derartige Aufnehmer-Gehäuse für Meßwandler darüberhinaus häufig auch die Anforderung gestellt, daß sie im Falle eines undichten oder berstenden Meßrohrs dem dann zumeist deutlich über dem atmosphärischen Aussendruck liegenden statischen Innendruck innerhalb der Kavität zumindest für eine vorgegebene Dauer leckfrei standhalten, mithin eine gewisse Druckfestigkeit aufweisen, vgl. hierzu auch die eingangs erwähnten WO-A 00/ 57 141, US-B 73 92 709, US-B 69 57 587, US-A 60 44 715, US-A 53 01 557 bzw. EP-A 1 001 254. Nicht zuletzt für Anwendungen mit toxischen oder leicht entzündbaren Fluiden muß das Aufnehmer-Gehäuse ggf. dabei sogar auch die an Sicherheitsbehälter gestellten Anforderungen erfüllen können.

Ein damit einhergehender Nachteil des Standes der Technik ist darin zu sehen, nicht zuletzt auch für Anwendungen mit unter hohem statischen Druck von weit über 100 bar stehenden Medien, darin, daß bei entsprechender Skalierung herkömmlicher Aufnehmer-Gehäuse, die jeweilige Wandstärke und damit einhergehend deren Masse sowie die Herstellkosten überproportional steigen würden.

Ein Aufgabe der Erfindung besteht daher darin, Aufnehmergehäuse von Meßwandlern der vorbeschriebenen Art, insb. als Coriolis-Massedurchflußmesser und/oder als Dichtemesser dienende Meßwandler vom Vibrationstyp, so zu verbessern, daß sie bei möglichst geringem Einbaumasse des Meßwandlers auch hohen Innendrücken von über 100 bar standhalten können.

Zur Lösung der Aufgabe besteht die Erfindung in einem Meßwandler, insb. Meßwandler vom Vibrationstyp oder magnetisch-induktiver Meßwandler, welcher Meßwandler wenigstens ein, beispielsweise aus Metall bestehendes, Meßrohr zum Führen eines strömenden Mediums, beispielsweise eines Gases und/oder einer Flüssigkeit; sowie ein mit dem wenigsten einen Meßrohr mechanisch gekoppeltes Aufnehmer-Gehäuse umfaßt, wobei das Aufnehmer-Gehäuse eine, beispielsweise aus Metall bestehende, innere - nämlich eine das wenigstens eine Meßrohr aufnehmende Kavität bildende - Hülle und eine zumindest anteilig mittels eines, beispielsweise unter mechanischer Vorspannung stehenden und/oder monofilen, Garns gebildete äußere - nämlich außerhalb der Kavität plazierte - Hülle, die die innere Hülle umgibt, aufweist.

Darüberhinaus besteht die Erfindung in einem Meßsystem zum Messen eines in einer Rohrleitung strömenden, insb. gasförmigen und/oder flüssigen, Mediums, welches Meßsystem einen solchen Meßwandler sowie eine damit elektrisch gekoppelte Meßelektronik zum Erzeugen von wenigstens einem einen Parameter des Mediums repräsentierenden Meßwerts, beispielsweise unter Verwendung wenigstens eines von einem Sensorelement des Meßwandlers erzeugten Meßsignals.

Nach einer ersten Ausgestaltung des Meßwandlers der Erfindung ist vorgesehen, daß das Garn zumindest anteilig aus einer Glas-Faser und/oder aus einer Kohlenstoff-Faser und/oder aus einer Aramidfasern besteht.

Nach einer zweiten Ausgestaltung des Meßwandlers der Erfindung ist vorgesehen, daß das Garn ein Filamentgarn, insb. ein Monofilament, ein Minifilamentgarn oder ein Multifilamentgarn, ist.

Nach einer dritten Ausgestaltung des Meßwandlers der Erfindung ist vorgesehen, daß das Garn unter Vorspannung und/oder mehrfach um die innere Hülle gewickelt ist.

Nach einer vierten Ausgestaltung des Meßwandlers der Erfindung ist vorgesehen, daß das Garn elastisch gedehnt ist, mithin vorgespannt ist.

Nach einer fünften Ausgestaltung des Meßwandlers der Erfindung ist vorgesehen, daß die innere Hülle die Kavität hermetisch dicht verschließt.

Nach einer sechsten Ausgestaltung des Meßwandlers der Erfindung ist vorgesehen, daß die innere Hülle einen zylindrisch, insb. kreiszylindrisch, geformten Bereich aufweist. Diese Ausgestaltung der Erfindung weiterbildend ist ferner vorgesehen, daß die äußere Hülle den zylindrisch geformten Bereich zumindest anteilig überdeckt.

Nach einer siebenten Ausgestaltung des Meßwandlers der Erfindung ist vorgesehen, daß die äußere Hülle mehr als 50%, insb. mehr als 80%, der Oberfläche der inneren Hülle überdeckt.

Nach einer achten Ausgestaltung des Meßwandlers der Erfindung ist vorgesehen, daß die äußere Hülle mehr als 50%, insb. mehr als 80%, der Oberfläche der inneren Hülle kontaktiert.

Nach einer neunten Ausgestaltung des Meßwandlers der Erfindung ist vorgesehen, daß die innere Hülle eine einem innerhalb der Kavität herrschenden statischen Innendruck entgegenwirkende Druckfestigkeit, die weniger als 90% einer nämlichem Innendruck entgegenwirkende Druckfestigkeit des Aufnehmer-Gehäuses beträgt, aufweist. Diese Ausgestaltung der Erfindung weiterbildend ist ferner vorgesehen, daß die Druckfestigkeit des Aufnehmer-Gehäuses größer als 80bar, insb. größer als 100bar, ist.

Nach einer zehnten Ausgestaltung des Meßwandlers der Erfindung ist vorgesehen, daß die äußere Hülle und die innere Hülle des Aufnehmer-Gehäuses einander kontaktieren.

Nach einer elften Ausgestaltung des Meßwandlers der Erfindung ist vorgesehen, daß die äußere Hülle eine das Garn einbettenden, mittels eines Kunststoff, insb. einem Epoxidharz, gebildete Matrix aufweist.

Nach einer zwölften Ausgestaltung des Meßwandlers der Erfindung umfaßt dieser weiters wenigstens einen innerhalb der durch die innere Hülle gebildeten Kavität plazierten Schwingungserreger zum Erzeugen von Vibrationen des wenigstens einen Meßrohrs; sowie wenigstens einen innerhalb der durch die innere Hülle gebildeten Kavität plaziertes Sensorelement zum Erfassen von Vibrationen des wenigstens einen Meßrohrs und zum Erzeugen eines nämliche Vibrationen repräsentierenden Meßsignals.

Ein Grundgedanke der Erfindung besteht darin Aufnehmergehäuse von Meßwandlern vom Vibrationstyp dadurch eine im Vergleich zu Aufnehmergehäuse konventioneller Meßwandler vom Vibrationstyp höhere Druckfestigkeit zu verleihen, indem eine quasi als Fluidbehälter dienende, mithin fluiddichte innere Hülle des Aufnehmergehäuses mit einem sehr reißfesten Garn, nämlich aus einer oder mehreren, ggf. zusammengedrehten Fasern, beispielsweise ein oder mehreren Kohlefaser(n), Aramidfaser(n), und/oder Glasfaser(n) gebildetes, linienförmiges Textil, umwickelt ist, mithin mit einer vergleichsweise dünnen und sehr leichten, allerdings extrem reißfesten äußeren Hülle verstärkt wird.

Die gewünschte Druckfestigkeit kann hierbei sehr einfach durch eine entsprechende Anzahl der Wicklung und/oder eine entsprechende Wicklungsführung erreicht werden. Eine weitere Erhöhung der Druckfestigkeit auf weit über 100bar kann zudem beispielsweise noch durch Einleiten einer entsprechend Vorspannung im Garn, etwa durch sehr straffes Wickeln desselben, und/oder eine nachträglich Fixierung des aufgewickelten Garns mit einem die Wicklungszwischenräume durchsetzenden und/oder die beiden Hüllen adhäsiv miteinander fest verbindenden Kunststoffs, beispielsweise einem Epoxidharz, erreicht.

Ein Vorteil der Erfindung besteht darin, daß durch die Verwendung von Garn zur Bildung der äußeren Hülle des Aufnehmergehäuses extrem hohe Druckfestigkeiten bei vergleichsweise geringer Zusatzmasse bzw. vergleichsweise geringem Volumenzuwachs erreicht werden können, dies beispielsweise auch bedarfsabhängig nachträglich bei auf Vorrat gefertigten Meßwandlern mit zunächst lediglich die innere Hülle, mithin nur eine Grunddruckfestigkeit aufweisenden Aufnehmergehäuse. Ein weiterer Vorteil der Erfindung ist im besonderen auch darin zu sehen, daß dadurch auch, ggf. geringfügig modifizierte, Aufnehmergehäuse von herkömmlichen Meßwandlern ohne weiteres druckfester gemacht werden können.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, nicht zuletzt auch Kombinationen zunächst nur einzeln erläuterter Teilaspekte der Erfindung, ergeben sich ferner aus den Figuren der Zeichnung wie auch den abhängigen Ansprüchen an sich.

Im einzelnen zeigen:
- Fig. 1a, b: ein - hier als In-Line-Meßgerät in Kompaktbauweise ausgebildetes - Meßsystem für in Leitungen strömende Medien in zwei verschiedenen Seitenansichten;
- Fig. 2: eine für die Verwendung in einem Meßsystem gemäß den Fig. 1a, 1b geeigneten - hier als Meßwandler vom Vibrationstyp ausgebildeten - Meßwandler;
- Fig. 3a, 3b, 3c: Detailansichten von Varianten von für die Bildung eines für den Meßwandler gemäß Fig. 2, mithin für ein Meßsystem gemäß den Fig. 1a, 1b geeigneter Aufnehmer-Gehäusen; und
- Fig. 4: in einer perspektivischen Seitenansicht eine weitere Variante für ein erfindungsgemäßes Meßsystem.

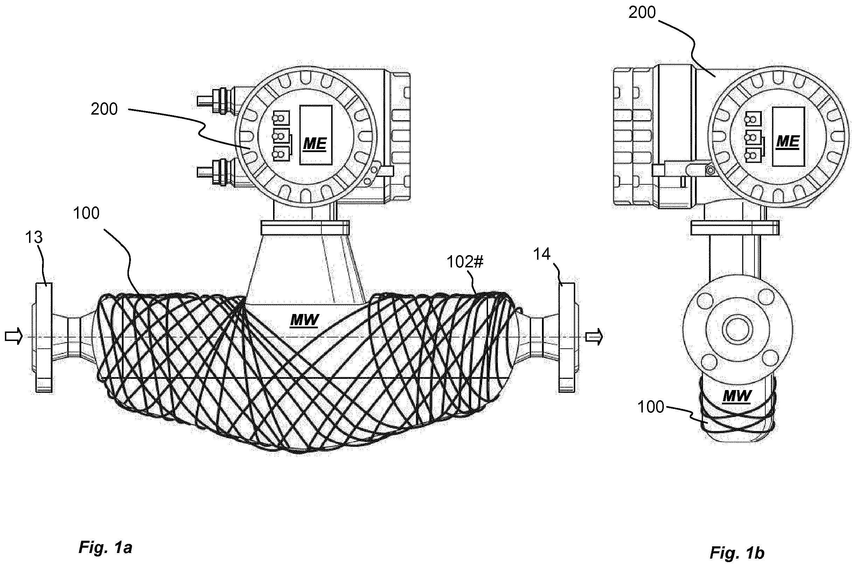

In den Fig. 1a, 1b ist ein Ausführungsbeispiel eines, insb. für die Verwendung in der industriellen Meß- und Automatisierungstechnik geeigneten, Meßsystems für ein in einer - hier nicht dargestellten - Prozeßleitung strömendes Medium, wie etwa einer Flüssigkeit und/oder einem Gas, schematisch dargestellt.

Das Meßsystem dient im besondern dazu, wenigstens eine physikalische Meßgröße des in derbeispielsweise als Rohrleitung ausgebildeten - Prozeßleitung geführten, insb. unter hohem statischen Druck von größer als 80bar stehenden, Mediums zu messen. Meßgröße kann beispielsweise ein Strömungsparameter, wie etwa eine Massendurchflußrate m oder einen totalisierten Massendurchfluß M, des strömenden Mediums oder beispielsweise auch ein Stoffparameter, wie etwa eine Dichte ρ oder eine Viskosität η, des in der Prozeßleitung geführten Mediums sein.

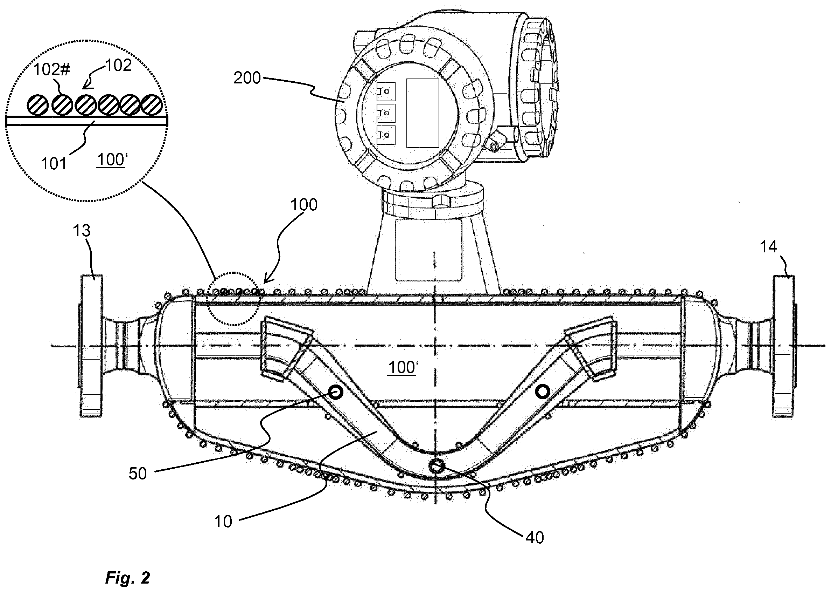

Zum Erfassen der wenigstens eine Meßgröße weist das Meßsystem einen mit dem zu messenden Medium in Wechselwirkung stehenden - hier in den Verlauf der Prozeßleitung via Flansche 13, 14 einfügbaren, mithin im Betrieb vom zu messenden Medium durchströmten - Meßwandler MW zum Wandeln der wenigstens einen Meßgröße in wenigstens ein davon abhängiges Meßsignal sowie eine mit dem Meßwandler MW elektrisch gekoppelte, insb. in einem schlag- und/oder druckfesten Elektronik-Gehäuse 200 untergebrachte, Meßgerät-Elektronik ME zum Ansteuern des Meßwandlers und zum Auswerten des wenigstens einen von der wenigsten einen Meßgröße abhängigen, insb. elektrischen, Meßsignals, nämlich zum Erzeugen von wenigstens einem die zu erfassenden Meßgröße repräsentierenden Meßwerts unter Verwendung des Meßsignals. Der Meßwandler umfaßt, wie in Fig. 2 schematisch dargestellt, wenigstens ein, beispielsweise aus Metall bestehendes, ausreichend druckfestes - hier V-förmig gekrümmtes - Meßrohr 10 zum Führen des Mediums sowie ein mit dem wenigsten einen Meßrohr mechanisch gekoppeltes, gleichermaßen druckfestes, mithin eine Druckfestigkeit von größer als 80bar, insb. größer als 100bar, aufweisendes Aufnehmer-Gehäuse 100, das eine das Meßrohr 10 zumindest teilweise aufnehmende Kavität 100' bildet. Zwecks Generierung des mit der zu erfassenden Meßgröße korrespondierenden Meßsignals ist ferner wenigstens ein - mit dem Meßrohr 10 und/oder mit dem darin geführten Medium in Wechselwirkung stehendes - innerhalb der vom Aufnehmer-Gehäuse 100 gebildeten Kavität 100' plaziertes Sensorelement 50 vorgesehen, das direkt am Meßrohr bzw. in unmittelbarer Nähe desselben angeordnet ist und auf Änderungen der wenigstens einen Meßgröße mit einer entsprechenden Änderung wenigstens eines Signalparameters, beispielsweise einer Signalamplitude, einer Signalfrequenz oder einer Phasenwinkels, reagiert.

Gemäß einer Ausgestaltung der Erfindung ist das Meßgerät als ein Coriolis-Massendurchfluß-Meßgerät und/oder als ein Dichte-Meßgerät realisiert und ist dementsprechend der Meßwandler ein solcher vom Vibrationstyp bei dem das wenigstens eine Meßrohr 10 im Betrieb zwecks Generierung des Meßsignals zumindest zeitweise vibrieren gelassen wird und bei dem das wenigstens eine Sensorelement 50 zum Erfassen von örtlichen Vibrationen des Meßrohrs, die mit einer Massendurchflußrate und/oder einer Dichte eines durch nämliches Meßrohr 100 strömenden Mediums korreliert sind, dient. Zum Erzeugen von Vibrationen des wenigstens eine Meßrohr 10 weist der Meßwandler ferner einen mit dem Meßrohr in Wirkbeziehung stehenden, gleichermaßen wie das Sensorelement innerhalb der vom Aufnehmer-Gehäuse gebildeten Kavität 100' plazierten Schwingungserreger 40 auf.

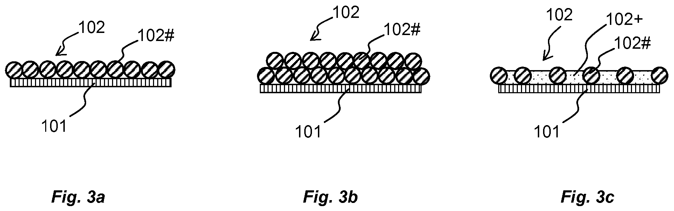

Wie bereits ist das Meßsystem im besonderen für Einsatz in Anwendungen mit einen hohen Druck aufweisenden Medien vorgesehen. Nicht zuletzt zum Erzielen einer entsprechend hohen Druckfestigkeit weist das Aufnehmer-Gehäuse beim erfindungsgemäßen Meßwandler im besonderen eine, beispielsweise aus Metall oder aus einem, ggf. faserverstärkten, Kunststoff bestehende, innere - nämlich eine das wenigstens eine Meßrohr 10, wie auch das daran angebrachte Sensorelement, aufnehmende Kavität bildende - Hülle 101 sowie eine zumindest anteilig mittels eines mehrfach um die innere Hülle gewickelten Garns 102# gebildete äußere - nämlich außerhalb der Kavität plazierte - Hülle 102 auf, die die innere Hülle 101 umgibt, beispielsweise derart, daß die äußere Hülle 102 und die innere Hülle 101 des Aufnehmer-Gehäuses, wie auch in Fig. 2 oder auch den Fig. 3a, 3b bzw. 3c jeweils schematisch dargestellt, einander direkt kontaktieren, und/oder daß das Garn 102#, wie auch in Fig. 3b schematisierte dargestellt, zu übereinanderliegenden Schichten auf die innere Hülle 101 aufgewickelt, mithin mehrfach um die innere Hülle 101 gewickelt ist.

Gemäß einer weiteren Ausgestaltung der Erfindung ist hierbei ferner vorgesehen, daß die äußere Hülle 102 eine einem innerhalb der Kavität 100' - potentiell, nämlich im Falle des Leckschlagens oder Berstens des Meßrohrs - herrschenden statischen Innendruck entgegenwirkende Druckfestigkeit, die mehr als 10% einer nämlichem Innendruck entgegenwirkende Druckfestigkeit des Aufnehmer-Gehäuses 100 beträgt, aufweist, mithin daß die innere Hülle 101 eine nämlichem innerhalb der Kavität 100' herrschenden statischen Innendruck entgegenwirkende Druckfestigkeit, die weniger als 90% der Druckfestigkeit des Aufnehmer-Gehäuses beträgt, aufweist. Im Ergebnis bewirkt also die äußere Hülle 102, im Vergleich zu einem lediglich mittels einer der inneren Hülle entsprechenden Hülle gebildeten Aufnehmer-Gehäuse, eine entsprechende Erhöhung der Druckfestigkeit bei im Vergleich nur geringfügiger Zunahme der Einbaumasse des Meßwandlers MW bzw. dessen äußeren Abmessungen.

Im besonderen ist ferner vorgesehen, daß die äußere Hülle 102 mehr als 50%, insb. mehr als 80%, der Oberfläche der inneren Hülle 101 kontaktiert. Die innere Hülle 101 des Aufnehmer-Gehäuses ist gemäß einer weiteren Ausgestaltung der Erfindung so ausgebildet, daß sie die Kavität hermetisch dicht verschließt. Darüberhinaus kann die äußere Hülle so ausgebildet sein, daß sie mehr als 50%, insb. mehr als 80%, der Oberfläche der inneren Hülle überdeckt, beispielsweise auch so, daß große zusammenhängende Bereiche der inneren Hülle von der äußeren Hülle blickdicht überdeckt sind. Bei dem zur Bildung der äußeren Hülle verwendeten Garn 102# kann es sich beispielsweise um ein Filamentgarn, mithin ein mittels einer einzigen Faser gebildetes Monofilament, ein aus zwei bis fünf Einzelfasern gebildetes Minifilamentgarn oder ein mehr als fünf Einzelfasern aufweisende Multifilamentgarn, handeln. Als für die Herstellung des hier verwendeten Garns 102# besonders geeignete Fasern sind beispielsweise Glas-Fasern, Kohlenstoff-Fasern wie auch Aramidfasern zu nennen, die jeweils extrem reißfest sind. Zur weiteren Erhöhung der für das Aufnehmer-Gehäuse 100 schlußendlich erzielten Druckfestigkeit kann das Garn 102# so auf die innere Hülle 101 des Aufnehmer-Gehäuses gewickelt sein, daß es elastisch gedehnt, mithin vorgespannt ist, und/oder kann die äußere Hülle 102 zusätzlich mittels eines Kunststoffes 102+, beispielsweise einem Epoxidharz, gebildet sein, der, wie in Fig. 3c schematisiert dargestellt, als eine das Garn 102# einbettenden Matrix dient.

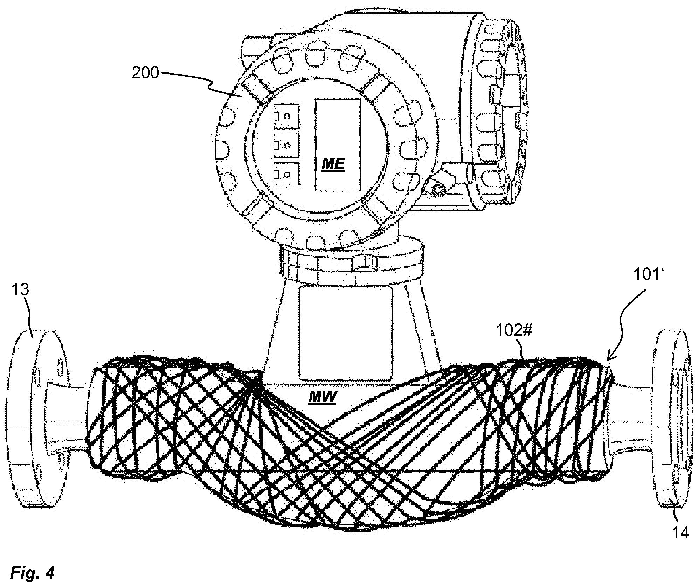

Gemäß einer weiteren Ausgestaltung der Erfindung ist - nicht zuletzt auch zwecks Vereinfachung auch des Aufwickelns des Garns 102# auf die innere Hülle 101 und/oder zwecks Erzielung einer möglichst hohen Druckfestigkeit bereits auch für die innere Hülle - vorgesehen, daß die innere Hülle 101 des Aufnehmer-Gehäuses, wie auch aus Fig. 4 ersichtlich, wenigstens einen zylindrisch, insb. kreiszylindrisch, geformten Bereich 101' aufweist, beispielsweise also in etwa einem Aufnehmer-Gehäuses gemäß den in den eingangs erwähnten US-A 57 96 011, US-B 07017424, US-B 07350421 bzw. US-B 07392709 gezeigten Meßwandlern bzw. Meßsystemen entspricht. Ferner ist hierbei vorgesehen, daß die äußere Hülle diesen wenigstens einen, zylindrisch geformten Bereich 101' zumindest anteilig überdeckt, mithin also das Garn 102#, wie in Fig. 4 schematisch dargestellt, auch um nämlichen Bereich 101' des Aufnehmer-Gehäuses gewickelt ist.

## Patentansprüche

1. Meßwandler, insbesondere Meßwandler vom Vibrationstyp oder magnetisch-induktiver Meßwandler, umfassend:
- wenigstens ein Meßrohr (10) zum Führen eines strömenden Mediums, sowie
- ein mit dem wenigstens einen Meßrohr (10) mechanisch gekoppeltes Aufnehmer-Gehäuse (100), das
-- eine innere - nämlich eine das wenigstens eine Meßrohr (10) aufnehmende Kavität (100') bildende - Hülle (101) und
-- eine zumindest anteilig mittels eines Garns (102#) gebildete äußere - nämlich außerhalb der Kavität (100') plazierte - Hülle (102), die die innere Hülle umgibt, aufweist.

2. Meßwandler nach einem der vorherigen Ansprüche, wobei das Garn (102#) zumindest anteilig aus einer Glas-Faser und/oder aus einer Kohlenstoff-Faser und/oder aus einer Aramidfasern besteht.

3. Meßwandler nach einem der vorherigen Ansprüche, wobei das Garn ein Filamentgarn, insb. ein Monofilament, ein Minifilamentgarn oder ein Multifilamentgarn, ist.

4. Meßwandler nach einem der vorherigen Ansprüche, wobei das Garn unter Vorspannung und/oder mehrfach um die innere Hülle gewickelt ist.

5. Meßwandler nach einem der vorherigen Ansprüche, wobei das Garn elastisch gedehnt ist, mithin vorgespannt ist.

6. Meßwandler nach einem der vorherigen Ansprüche, wobei die innere Hülle die Kavität hermetisch dicht verschließt.

7. Meßwandler nach einem der vorherigen Ansprüche, wobei die innere Hülle wenigstens einen zylindrisch, insb. kreiszylindrisch, geformten Bereich (101') aufweist.

8. Meßwandler nach dem vorherigen Anspruch, wobei die äußere Hülle den zylindrisch geformten Bereich zumindest anteilig überdeckt.

9. Meßwandler nach einem der vorherigen Ansprüche, wobei die äußere Hülle mehr als 50%, insb. mehr als 80%, der Oberfläche der inneren Hülle überdeckt.

10. Meßwandler nach einem der vorherigen Ansprüche, wobei die äußere Hülle mehr als 50%, insb. mehr als 80%, der Oberfläche der inneren Hülle kontaktiert.

11. Meßwandler nach einem der vorherigen Ansprüche, wobei die innere Hülle eine einem innerhalb der Kavität herrschenden statischen Innendruck entgegenwirkende Druckfestigkeit, die weniger als 90% einer nämlichem Innendruck entgegenwirkende Druckfestigkeit des Aufnehmer-Gehäuses beträgt, aufweist.

12. Meßwandler nach dem vorherigen Anspruch, wobei die Druckfestigkeit des Aufnehmer-Gehäuses größer als 80bar, insbesondere größer als 100bar, ist.

13. Meßwandler nach einem der vorherigen Ansprüche,
- wobei die äußere Hülle und die innere Hülle des Aufnehmer-Gehäuses einander kontaktieren; und/oder
- wobei die äußere Hülle eine das Garn einbettenden, mittels eines Kunststoff (102+), insbesondere einem Epoxidharz, gebildete Matrix aufweist.

14. Meßwandler nach einem der vorherigen Ansprüche, weiters umfassend:
- wenigstens einen innerhalb der durch die innere Hülle gebildeten Kavität plazierten Schwingungserreger (40) zum Erzeugen von Vibrationen des wenigstens einen Meßrohrs (10); sowie
- wenigstens einen innerhalb der durch die innere Hülle gebildeten Kavität (100') plaziertes Sensorelement (50) zum Erfassen von Vibrationen des wenigstens einen Meßrohrs und zum Erzeugen eines nämliche Vibrationen repräsentierenden Meßsignals.

15. Meßwandler nach einem Ansprüche 1 bis 13, weiters umfassend: zur Generierung eines mit einer zu erfassenden Meßgröße korrespondierenden Meßsignals ein - mit dem Meßrohr (10) und/oder mit dem darin geführten Medium in Wechselwirkung stehendes - Sensorelement (50), das innerhalb der Kavität (100') plaziert und direkt am Meßrohr (10) bzw. in unmittelbarer Nähe desselben angeordnet ist.

16. Meßsystem zum Messen eines in einer Rohrleitung strömenden, insbesondere gasförmigen und/oder flüssigen, Mediums, welches Meßsystem einen Meßwandler (MW) nach einem der vorherigen Ansprüche sowie eine damit elektrisch gekoppelte Meßelektronik (ME) zum Erzeugen von wenigstens einem eine Meßgröße des Mediums repräsentierenden Meßwerts, insbesondere unter Verwendung wenigstens eines von einem Sensorelement (50) des Meßwandlers (MW) erzeugten Meßsignals.

## Claims

1. Transducer, particularly a vibronic-type transducer or an electromagnetic transducer, comprising:
- at least a measuring tube (10) designed to conduct a flowing medium, and
- a sensor housing (100) mechanically coupled with the at least one measuring tube (10), said housing comprising
-- an interior envelope (101) - particularly an envelope forming the cavity (100') accommodating the least one measuring tube (10), and
-- an exterior envelope at least partially formed by a yarn (102#), said exterior envelope being placed outside the cavity (100'), said exterior envelope surrounding the interior envelope.

2. Transducer as claimed in the previous claim, wherein the yarn (102#) is at least partially made from a fibre glass and/or a carbon fibre and/or an aramid fibre.

3. Transducer as claimed in one of the previous claims, wherein the yarn is a filament yarn, particularly a monofilament yarn, a mini-filament yarn or a multifilament yarn.

4. Transducer as claimed in one of the previous claims, wherein the yarn is wound around the interior envelope under tension and/or several times.

5. Transducer as claimed in one of the previous claims, wherein the yarn is stretched elastically, i.e. pre-tensioned.

6. Transducer as claimed in one of the previous claims, wherein the interior envelope hermetically seals the cavity.

7. Transducer as claimed in one of the previous claims, wherein the interior envelope has at least one cylindrical, particularly circular cylindrical, zone (101').

8. Transducer as claimed in the previous claim, wherein the exterior envelope at least partially covers the cylindrically formed area.

9. Transducer as claimed in one of the previous claims, wherein the exterior envelope covers more than 50 %, particularly more than 80 %, of the surface of the interior envelope.

10. Transducer as claimed in one of the previous claims, wherein the exterior envelope is in contact with more than 50 %, particularly more than 80 %, of the surface of the interior envelope.

11. Transducer as claimed in one of the previous claims, wherein the interior envelope has a pressure resistance acting against a static inner pressure present in the cavity, said pressure resistance being less than 90 % of a pressure resistance of the sensor housing acting against said inner pressure.

12. Transducer as claimed in the previous claim, wherein the pressure resistance of the sensor housing is greater than 80 bar, particularly greater than 100 bar.

13. Transducer as claimed in one of the previous claims,
- wherein the exterior envelope and the interior envelope of the sensor housing are in contact with one another;
and/or
- wherein the exterior envelope comprises a matrix embedding the yarn and formed by a plastic material (102+), particularly an epoxy resin.

14. Transducer as claimed in one of the previous claims, further comprising:
- at least a vibration exciter (40) placed inside the cavity formed by the interior envelope, said exciter being designed to generate vibrations of the at least one measuring tube (10); and
- at least a sensor element (50) placed inside the cavity (100') formed by the interior envelope, said sensor being designed to detect vibrations of the at least one measuring tube and to generate a measuring signal representing said vibrations.

15. Transducer as claimed in one of the Claims 1 to 13, further comprising:
a sensor element (50) designed to generate a measuring signal corresponding to a measured variable to be measured, wherein said sensor element interacts with the measuring tube (10) and/or the medium conducted in the tube, wherein said sensor element is placed inside the cavity (100') and arranged directly on the measuring tube (10) or in its immediate vicinity.

16. Measuring system designed to measure a medium, particularly gaseous and/or liquid, flowing through a pipe, said measuring system comprising a transducer (MW) as claimed in one of the previous claims, as well as a measuring electronics unit (ME) electrically coupled to said transducer, wherein said electronics unit is designed to generate at least a measured value representing a measured variable of the medium, particularly using at least a measuring signal generated by a sensor element (50) of the transducer (MW).

## Revendications

1. Transducteur, notamment un transducteur du type à vibrations ou un transducteur magnéto-inductif, comprenant :
- au moins un tube de mesure (10) destiné à guider un produit en écoulement, ainsi que
- un boîtier de transmetteur (100) couplé mécaniquement avec l'au moins un tube de mesure (10), lequel boîtier comprend
-- une enveloppe intérieure (101) - notamment une enveloppe formant la cavité (100') recevant l'au moins un tube de mesure (10), et
-- une enveloppe extérieure formée au moins partiellement au moyen d'un fil (102#), laquelle enveloppe extérieure est placée notamment à l'extérieur de la cavité (100'), laquelle enveloppe extérieure entoure l'enveloppe intérieure.

2. Transducteur selon la revendication précédente, pour lequel le fil (102#) est constitué au moins en partie d'une fibre de verre et/ou d'une fibre de carbone et/ou d'une fibre aramide.

3. Transducteur selon l'une des revendications précédentes, pour lequel le fil est un filament, notamment un monofilament, un mini-filament ou un multifilament.

4. Transducteur selon l'une des revendications précédentes, pour lequel le fil est enroulé autour de l'enveloppe intérieure sous précontrainte et/ou plusieurs fois.

5. Transducteur selon l'une des revendications précédentes, pour lequel le fil est étiré élastiquement, c'est-à-dire précontraint.

6. Transducteur selon l'une des revendications précédentes, pour lequel l'enveloppe intérieure ferme hermétiquement la cavité.

7. Transducteur selon l'une des revendications précédentes, pour lequel l'enveloppe intérieure présente au moins une zone (101') de forme cylindrique, notamment de forme cylindrique circulaire.

8. Transducteur selon la revendication précédente, pour lequel l'enveloppe extérieure recouvre au moins partiellement la zone de forme cylindrique.

9. Transducteur selon l'une des revendications précédentes, pour lequel l'enveloppe extérieure couvre plus de 50 %, notamment plus de 80 %, de la surface de l'enveloppe intérieure.

10. Transducteur selon l'une des revendications précédentes, pour lequel l'enveloppe extérieure est en contact avec plus de 50 %, notamment plus de 80 %, de la surface de l'enveloppe intérieure.

11. Transducteur selon l'une des revendications précédentes, pour lequel l'enveloppe intérieure présente une résistance à la compression s'opposant à une pression interne statique régnant à l'intérieur de la cavité qui est inférieure à 90 % d'une résistance à la compression s'opposant notamment à la pression interne du boîtier de transmetteur.

12. Transducteur selon la revendication précédente, pour lequel la résistance à la compression du boîtier de transmetteur est supérieure à 80 bar, notamment supérieure à 100 bar.

13. Transducteur selon l'une des revendications précédentes,
- pour lequel l'enveloppe extérieure et l'enveloppe intérieure du boîtier de transmetteur sont en contact l'une avec l'autre ;
et/ou
- pour lequel l'enveloppe extérieure comprend une matrice enrobant le fil et formée au moyen d'une matière plastique (102+), notamment une résine époxy.

14. Transducteur selon l'une des revendications précédentes, comprenant en outre :
- au moins un excitateur de vibrations (40) placé à l'intérieur de la cavité formée par l'enveloppe intérieure, lequel excitateur est conçu pour générer des vibrations de l'au moins un tube de mesure (10) ; et
- au moins un élément capteur (50) placé à l'intérieur de la cavité (100') formée par l'enveloppe extérieure, lequel capteur est conçu pour détecter les vibrations de l'au moins un tube de mesure et pour générer un signal de mesure représentant lesdites vibrations.

15. Transducteur selon l'une des revendications 1 à 13, comprenant en outre :
un élément capteur (50) conçu pour générer un signal de mesure correspondant à une grandeur à mesurer, lequel élément capteur interagit avec le tube de mesure (10) et/ou le produit qui y est acheminé, lequel élément capteur est placé à l'intérieur de la cavité (100') et disposé directement sur le tube de mesure (10) ou à proximité immédiate de celui-ci.

16. Système de mesure destiné à la mesure d'un produit, notamment gazeux et/ou liquide, s'écoulant dans une conduite, lequel système de mesure comprend un transducteur (MW) selon l'une des revendications précédentes, ainsi qu'une électronique de mesure (ME) couplée électriquement audit transducteur, laquelle électronique est destinée à générer au moins une valeur mesurée représentant une grandeur de mesure du produit, notamment en utilisant au moins un signal de mesure généré par un élément capteur (50) du transducteur (MW).
